# EUROPEAN PATENT SPECIFICATION

(11) **EP 0 570 707 B1**
(45) Date of publication and mention of the grant of the patent: **03.03.1999**
(21) Application number: 93106480.2
(22) Date of filing: 21.04.1993
(51) Int. Cl.: G01N 30/88

(54) **Method of calculating operating parameters for a gas chromatograph**
Verfahren zur Berechnung der Betriebsparameter eines Gaschromatografens
Procédé de calcul des paramètres de fonctionnement d'un chromatographe à gaz

(30) Priority: 18.05.1992 US 883995
(43) Date of publication of application: 24.11.1993
(73) Proprietor: HEWLETT-PACKARD COMPANY, Palo Alto, California 94304-1181 (US)
(72) Inventor: Snyder, Warren Dale, West Chester, PA 19380 (US); Blumberg, Leonid M., Hockessin, DE 19707 (US)
(74) Representative: Schoppe, Fritz, Dipl.-Ing.

(56) References cited:
- US-A- 4 824 446
- ADVANCES IN INSTRUMENTATION, vol.41, 1986, RESEARCH TRIANGLE PARK, NC, US pages 383 - 402 ANNINO R ET AL 'A computer aided optimization program including stationary phase selection and optimized analysis conditions'
- INTELLIGENT INSTRUMENTS & COMPUTERS, vol.5, no.9, September 1987, US pages 231 - 239 CELA R ET AL 'APTA: a new algorithm for the optimization and transference of experimental conditions in HPLC'
- LC-GC INTERNATIONAL, vol.5, no.2, 1992, EUGENE, OR, US pages 28 - 37 DROUEN A ET AL 'Sofware for chromatographic method development'
- ANALYTICAL CHEMISTRY, vol 50, no 13, November 1978, US, pages 1812-1821;GUIOCHON G 'Speed of analysis in open tabular columns gas chromatography'

## Description

The present invention relates to a method for automatic configuration of operating parameters of a gas chromatograph.

### BACKGROUND OF THE INVENTION

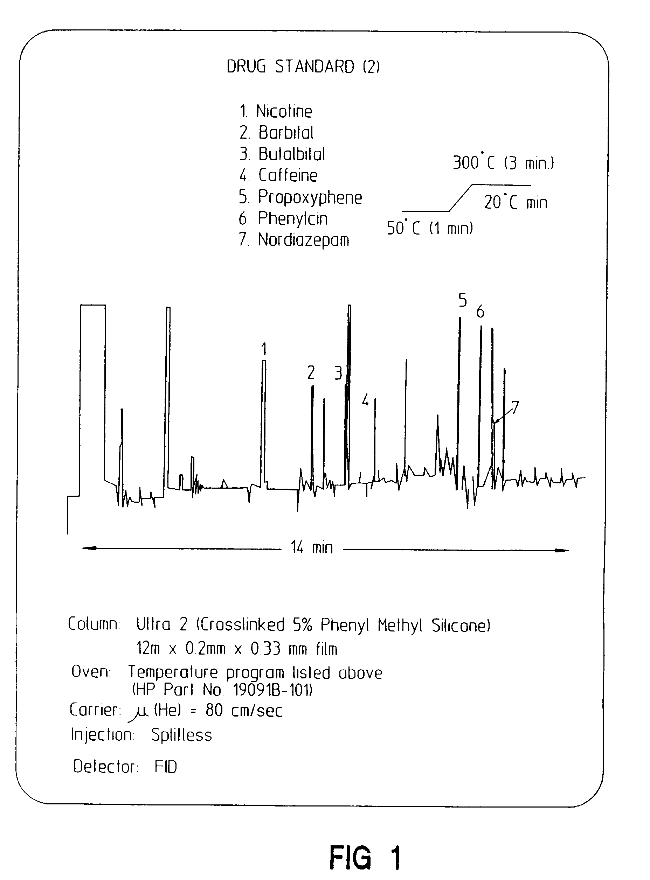

An analyst attempting to separate and identify unknown compounds typically refers to compilations of chromatographic methods to obtain a method which has the greatest potential for separating and identifying the Unknown compounds. One such compilation is entitled "Analytical Solutions - a Collection of Chromatograms from Hewlett-Packard". This compilation contains a collection of over 400 capillary column methods developed by a variety of HP field and factory personnel over a period of ten years. Figure 1 illustrates one such method entitled "Drug Standard (2)" which is employed for identifying known drugs and highlights which column parameters and which operating parameters are required to replicate this method. The column parameters include: column length (1), column inside diameter (id) and stationary phase (thickness (d_{f}) and type). The operating parameters include: carrier gas (type, pressure and/or flow rate), oven temperature (including program ramp rates). A sample chromatogram highlighting the time at which known compounds will elute from the column is also illustrated, thus making it possible to identify unknown compounds based on the elution order and time. It is generally not possible to change any one of the column or operating parameters without effecting the peak elution time, resolution and in many cases the elution order. The vast number of column types and sizes makes it quite conceivable that an analyst will be unable to practice a published method for lack of the specified column and may simply wish to recast the method to work with a different size column.

An analyst may also independently develop a chromatographic method by applying chromatographic theory, intuition and experimentation to determine what column and operating parameters are required to meet defined analytical objectives. Method development is very time consuming as empirical experimentation requires many sample injections to perfect. Again, once a method has been developed, it is generally not possible to change any of the column or operating parameters without changing the chromatographic output.

It is generally known that the speed of a chromatographic process is inversely proportional to the resolution. When the chromatographic output contains well resolved peaks, it is possible to make a tradeoff between speed and resolution. Faster analysis time in a chromatographic process may be accomplished by implementing one or more of the following: a shorter column, a column with a smaller inside diameter (i.d.), a thinner liquid phase film, a faster temperature program rate, or a higher carrier gas linear velocity. An analyst will typically first try changing the temperature program rate and/or the carrier gas velocity. Since the magnitude of the change is determined empirically, there is no quantitative way of achieving a calculated change in speed. Additionally, such a change will typically effect the chromatographic output.

INTELLIGENT INSTRUMENTS & COMPUTERS, vol. 5, no. 9, September 1987, US, pages 231 - 239 CELA R. et al "APTA: a new algorithm for the optimization and transference of experimental conditions in HPLC" describes an algorithm which allows experimental parameters to be transferred such that a given mixture of substances can be satisfactorily resolved when changing from one chromatographic column to another by carrying out a limited number of experiments. The algorithm uses two types of techniques for optimization of chromotographic separations "those based on the use of numerical response functions and those based on the study of retention or resolution maps". In case retention or resolution maps are used the number of experiments necessary to derive an optimized operation can be reduced wherein the success, i.e. the number of experiments necessary depends on the reliability of the maps. In case the algorithm is applied to a system where no preliminary information is available a greater number of experiments are necessary when compared to the number of experiments necessary when maps are used. Although the algorithm somewhat speeds up the overall process of optimizing it still requires a specific number of experiments. The drawback of such an approach is that it is still quite time-consuming and wasteful of resources and material.

Advances in instrumentation, vol. 41, 1986 RESEARCH TRIANGLE PARK, NC, US, pages 383 - 402 ANNINO R. et al "A computer aided optimization program including stationary phase selection and optimized analysis conditions" describes a method to aid a chromatographer in not only selecting the stationary phase required for an analysis, but also in outlining exactly how the analysis is to be run, in order to meet the particular demands. A program which is based on a computer model of a chromatographic behaviour is described and the program has a first mode of operation in which operating conditions of a column of specified length and physical characteristics is optimized and wherein in a second mode a length is selected and the operating conditions are optimized to obtain the shortest analysis time or a specific minimum detectability.

ANALYTICAL CHEMISTRY, vol. 50, no. 13, November 1978, US, pages 1812-1821 GUIOCHON G "Speed of analysis in open tubular columns gas chromatography" describes the underlying physical theory of gas chromatography for the isothermal case. Relevant equations for temperature programmed gas chromatography are developed in US-A-4 824 446.

Starting from this prior art it is an object of the present invention to provide a method for automatic configuration of the operating parameters of a gas chromatograph which is not time-consuming and wasteful of resources and material and enables the transfer of a known method to work with a column having different parameters with little or no loss in resolution.

This object is achieved by a method according to claim 1.

The dependent claim discloses a preferred embodiment, in which the resolution is maintained on the new column.

### SUMMARY OF THE INVENTION

In accordance to the above, the invention is a method for modifying a known chromatographic method without changing peak elution order and with little or no change in resolution. Column and operational parameters of a known method are systematically translated to ensure that a new chromatographic method having possibly different column and operational parameters has a chromatographic output with similar separation. In particular, the peak elution temperature is maintained as any given peak will elute at the same temperature from one column to another.

In the preferred embodiment, a gas chromatograph is automatically configured with new operational parameters in response to the user input of new column parameters corresponding to a new column. The existing column and operating parameters are stored in the gas chromatograph such that upon input of the new column parameters, the gas chromatograph has all of the information necessary for translation calculations to obtain the new operating parameters. Once the new operating parameters are calculated, the gas chromatograph automatically reconfigures with these parameters such that the chromatographic output of the gas chromatograph with the new column and operating parameters is the same as with the old column and operating parameters.

In order to maintain constant resolution across a series of column diameters, it has been found that the phase ratio - volume of gas phase/volume of liquid phase inside column (inside diameter of column/4X stationary phase film thickness) must remain constant. The registration or spacing between output peaks and proportional peak widths (verifying constant resolution) between different chromatographic runs is achieved with appropriate scaling of integrator chart speeds.

The invention translates a existing method into a modified method having the same chromatographic output by compensating for the effects of the changes in column and operating parameters. In particular, any chromatographic process can be represented as a number of complex equations having column and operating parameters as variables. The invention is a technique for solving these equations simultaneously once the new column and/or operating parameters are ascertained. The invention contemplates that the column outlet linear velocity (uₒᵤₜ), instead of the more commonly used average linear velocity (u), is employed in all calculations. This greatly simplifies the calculations which represent the chromatographic process to the point where they can be performed automatically by system software residing on a gas chromatograph.

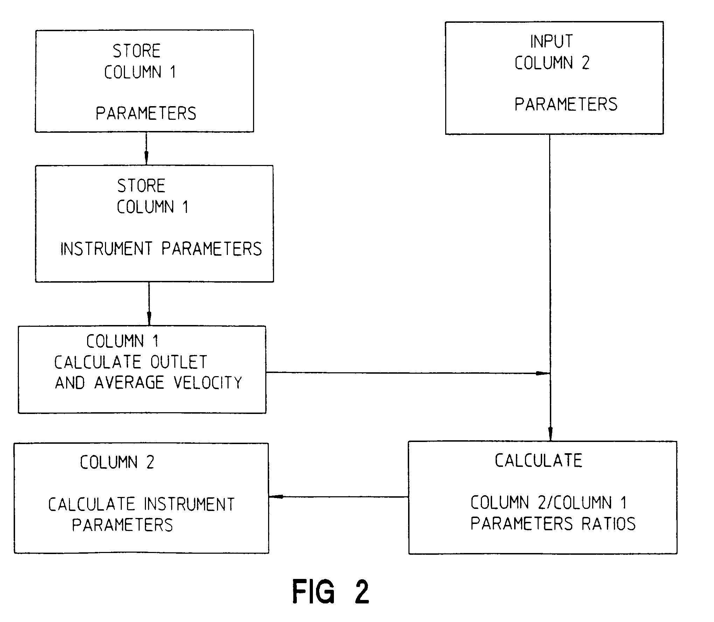

As illustrated in Figure 2, the translation method comprises the steps of:
1) storing existing column and operating parameters of the known chromatographic method; and
2) inputting the new column parameters; and
3) calculating new operating parameters from the stored column and operating parameters and the inputted column parameters; and
4) automatically configuring the gas chromatograph with the calculated new operating parameters such that at least the peak elution order is maintained on the new translated column.

The invention requires that the new column and the column in the existing method have the same liquid phase. This ensures that both columns give the same separation.

These and other objects are achieved in accordance with a preferred embodiment of the invention by providing system software running in conjunction with the gas chromatograph which has the capability of performing the calculations required in the translation process.

The foregoing and other object, features and advantages of the invention will be apparent from the following more particular description of preferred embodiments of the invention as illustrated in the accompanying drawings.

### BRIEF DESCRIPTION OF THE DRAWINGS

The invention is pointed out with particularity in the appended claims. However, other features of the invention will become more apparent and the invention will be best understood by referring to the following detailed description in conjunction with the accompanying drawings in which:

FIG. 1 illustrates the chromatographic output of a known capillary column method entitled "Drug Standard (2)".

FIG. 2 shows a block diagram illustrating a flow chart highlighting the invention.

FIG. 3 shows a block diagram illustrating a flow chart highlighting the step of calculating new operating parameters.

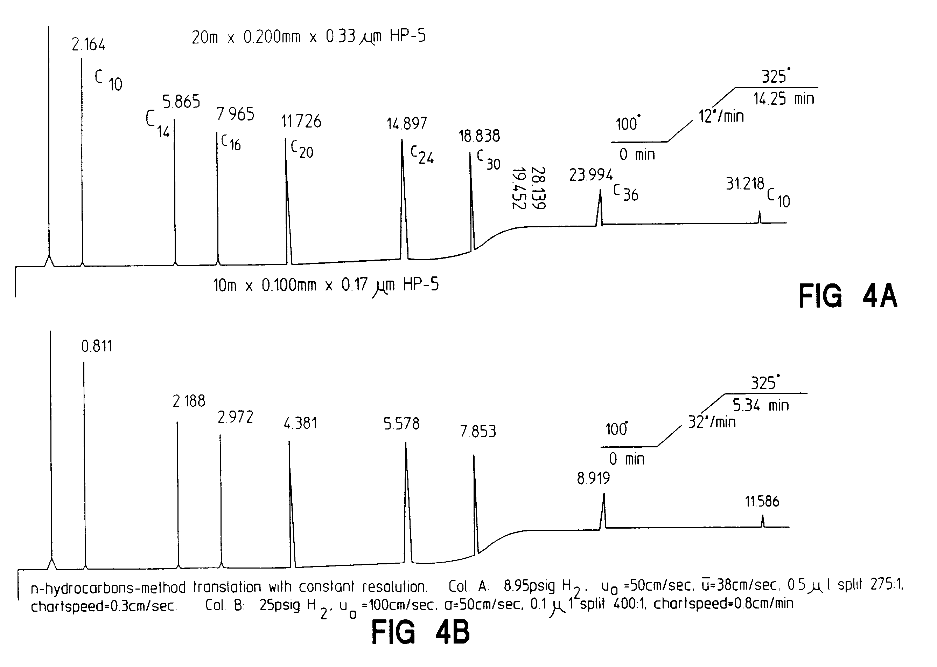

FIG. 4 illustrates the chromatographic output of a gas chromatograph which employs "existing" column and operating parameters (top portion) and the chromatographic output of a gas chromatograph, which employs "new" translated column and operating parameters (lower portion).

### DESCRIPTION OF THE PREFERRED EMBODIMENT

Referring now to FIG.2, a block diagram is shown of the inventive method in which existing column and operating parameters of a known chromatographic method are translated such that a new method, represented by new column and operating parameters, can be automatically configured and loaded into a gas chromatograph to provide the same chromatographic output as the existing method.

The following definitions for column and operational parameters are stored in the system software of the gas chromatograph and are used for proper translation.
Column Parameters (wherein a subscript 1 referes to column 1 and a subscript 2 refers to column 2):
   l₁ = length
   d₁ = inside diameter
   d_{f1}= film thickness
Operational Parameters:
   Pᵢ₁= inlet pressure
   Pₒ = outlet pressure
   j = James-Martin pressure correction
   β = phase ratio = d/4d_{f} for thin films
   uₒ = outlet linear velocity
   $\overline{\text{u}}$ = average linear velocity
   $\overline{\text{p}}$ = Pᵢ/Pₒ
   tₘ = holdup time
   tᵣ = retention time
   tᵣ' = tᵣ -tₘ = corrected retention time
   Fₒ = outlet flow
   n = carrier gas viscosity 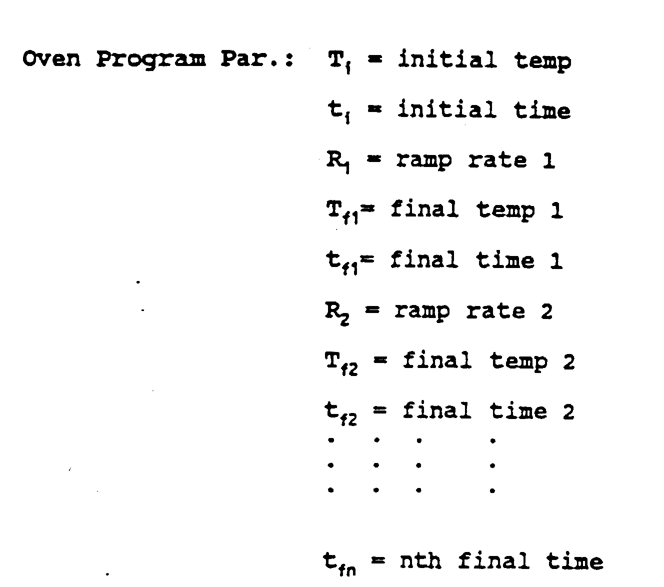
   (Note that for isothermal, R₁ = 0, Tᵢ = isothermal temp)
Sample Parameters:$\text{v = Sample volume injected}$$\text{Split Ratio =} \frac{\text{Split Vent Flow}}{{\text{F}}_{\text{o}}}$

### Expressions:

The following expressions are written as ratios of column 2 to column 1 parameters, e.g. :${\text{r}}_{\text{ℓ}} \text{=} \frac{\text{length col 2}}{\text{length col 1}} \text{=} \frac{{\text{l}}_{\text{2}}}{{\text{l}}_{\text{1}}}$${\text{r}}_{\text{ℓ}} \text{=} \frac{{\text{l}}_{\text{2}}}{{\text{l}}_{\text{1}}}$${\text{r}}_{\text{d}} \text{=} \frac{{\text{d}}_{\text{2}}}{{\text{d}}_{\text{1}}}$$\text{r} {\text{}}_{{\text{d}}_{\text{f}}} \text{=} \frac{{\text{d}}_{\text{f2}}}{{\text{d}}_{\text{f1}}}$${\text{r}}_{\text{β}} \text{=} \frac{{\text{β}}_{\text{2}}}{{\text{β}}_{\text{1}}} \text{=} \frac{{\text{r}}_{\text{d}}}{\text{r} {\text{}}_{{\text{d}}_{\text{f}}}}$${\text{r}}_{\text{R}} \text{= resolution ratio =} \frac{\sqrt{{\text{N}}_{\text{2}}}}{\sqrt{{\text{N}}_{\text{1}}}}$${\text{r}}_{\text{P}} \text{=} \frac{\text{P} {\text{}}_{{\text{i2}}^{\text{2}}} \text{- P} {\text{}}_{{\text{0}}^{\text{2}}}}{\text{P} {\text{}}_{{\text{i1}}^{\text{2}}} \text{- P} {\text{}}_{{\text{0}}^{\text{2}}}} \text{=} \frac{{\text{r}}_{\text{n}} {\text{·r}}_{\text{ℓ}} {\text{·r}}_{\text{u0}}}{\text{r} {\text{}}_{{\text{d}}^{\text{2}}}}$${\text{r}}_{\text{j}} \text{=} \frac{{\text{j}}_{\text{2}}}{{\text{j}}_{\text{1}}} \text{=} \frac{\text{(} \overline{\text{P}} {\text{}}_{{\text{2}}^{\text{2}}} \text{-1) (} \overline{\text{P}} {\text{}}_{{\text{1}}^{\text{3}}} \text{-1)}}{\text{(} \overline{\text{P}} {\text{}}_{{\text{2}}^{\text{3}}} \text{-1) (} \overline{\text{P}} {\text{}}_{{\text{1}}^{\text{2}}} \text{-1)}}$${\text{r}}_{\text{t}} \text{=} \frac{{\text{t}}_{\text{m2}}}{{\text{t}}_{\text{m1}}} \text{=} \frac{{\text{r}}_{\text{ℓ}}}{{\text{r}}_{\text{j}} {\text{·r}}_{\text{u0}}}$${\text{r}}_{\text{uo}} \text{=} \frac{{\text{u}}_{\text{02}}}{{\text{u}}_{\text{01}}}$$\frac{{\text{r}}_{\text{t}}}{{\text{r}}_{\text{β}}} \text{=} \frac{{\text{r}}_{\text{ℓ}} {\text{·r}}_{\text{df}}}{{\text{r}}_{\text{j}} {\text{·r}}_{\text{u0}} {\text{·r}}_{\text{d}}}$${\text{r}}_{\text{t'R}} \text{=} \frac{{\text{t}}_{\text{R'2}}}{{\text{t}}_{\text{R'1}}} \text{=} \frac{{\text{r}}_{\text{t}}}{{\text{r}}_{\text{β}}}$${\text{r}}_{\text{v}} \text{=} \frac{{\text{v}}_{\text{2}}}{{\text{v}}_{\text{1}}} {\text{= r}}_{\text{d}} {\text{·r}}_{\text{df}} {\text{·r}}_{\text{ℓ}}$$\text{r} {\text{}}_{\overline{\text{u}}} \text{=} \frac{{\overline{\text{u}}}_{\text{2}}}{{\overline{\text{u}}}_{\text{1}}} \text{=} \frac{{\text{j}}_{\text{2}} {\text{·u}}_{\text{02}}}{{\text{j}}_{\text{1}} {\text{·u}}_{\text{01}}} {\text{= r}}_{\text{j}} {\text{· r}}_{\text{u0}}$${\text{r}}_{\text{F0}} \text{=} \frac{{\text{F}}_{\text{02}}}{{\text{F}}_{\text{01}}} \text{= r} {\text{}}_{{\text{d}}^{\text{2}}} {\text{· r}}_{\text{u0}}$${\text{r}}_{\text{n}} \text{=} \frac{{\text{n}}_{\text{2}}}{{\text{n}}_{\text{1}}}$

### Additional Expressions

Poiseuille's equation for flow of a compressible fluid in a capillary:${\text{F}}_{\text{0}} \text{=} \frac{\text{π(P} {\text{}}_{{\text{i}}^{\text{2}}} \text{- P} {\text{}}_{{\text{0}}^{\text{2}}} {\text{)r}}^{\text{4}}}{{\text{16n1P}}_{\text{0}}} {\text{= πr}}^{\text{2}} {\text{u}}_{\text{0}}$

James-Martin correction factor: 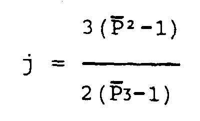 ${\text{u = ju}}_{\text{0}} \text{=} \frac{\text{1}}{{\text{t}}_{\text{m}}}$

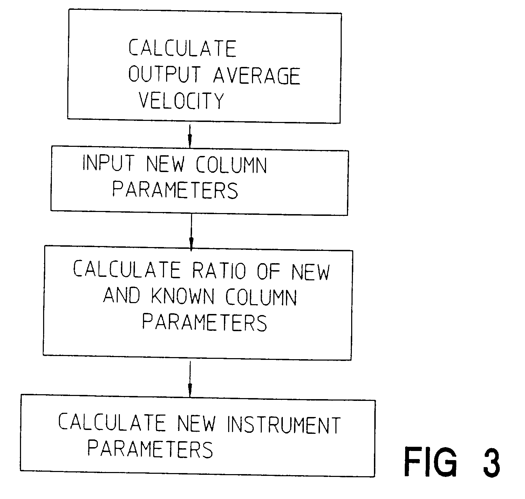

As illustrated in Figure 3, column translation is obtained by utilizing the ratio of the new column and the existing column parameters to obtain operating parameters as set forth in the above equations. If the column parameters do not change, then the ratio of the existing operating parameters and the new operating parameters are employed to ascertain the unknown operating parameters. In the preferred embodiment, the column outlet linear velocity (uₒᵤₜ) is employed and greatly simplifies the translation calculations.

The inventive method for translating chromatographic methods in which the prediction of retention time and peak width values between one column and another as well as the preservation of peak elution temperature can be illustrated through a number of examples. In a first example (Example 1), the calculations required to perform a translation from a first column having a diameter d₁ to a second column having a diameter d₂ is depicted. In Example 2, columns having the same column parameters are employed but the linear outlet velocity (an operating parameter) is changed and new inlet pressures and oven programs are calculated to provide the necessary translation. A sample volume calculation, or a determination of how much sample needs to be injected, is illustrated in Example 3.

### Example 1: Column diameters are different

The linear velocity is inversely proportional to diameter and therefore, 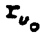 = 1/r_{d}. Additionally, the liquid phase type does not change.

The previously defined parameters for Column 1 provide for the calculation of the required operational parameters for column 2. In particular, almost all parameters are considered as their ratios between the two columns:${\text{r}}_{\text{x}} \text{=} \frac{{\text{x}}_{\text{2}}}{{\text{x}}_{\text{1}}} \text{=} \frac{\text{parameter x for column 2}}{\text{parameter x for column 1}}$ e.g.${\text{r}}_{\text{ℓ}} \text{=} \frac{{\text{l}}_{\text{2}}}{{\text{l}}_{\text{1}}} \text{=} \frac{\text{length col 2}}{\text{length col 1}}$ Thus, the following parameters need to be calculated:
r_{d} = diameter ratio = d₂/d₁
r_{ℓ} = length ratio = 1₂/1₁
r_{df}= film thickness ratio = d_{f2}/d_{f1}
r_{β} = phase ratio = r_{d}/r_{df}
If constant resolution is required, then the following must be true:${\text{r}}_{\text{d}} {\text{= r}}_{\text{1}} {\text{= r}}_{\text{df}}$${\text{r}}_{\text{β}} {\text{= 1 = r}}_{\text{R}}$ The parameters for column 2 are calculated as follows:${\text{r}}_{\text{p}} \text{=} \frac{{\text{r}}_{\text{η}} \text{r r} {\text{}}_{{\text{u}}_{\text{o}}}}{{\text{r}}_{\text{d}}^{\text{2}}} \text{=} \frac{{\text{r}}_{\text{ℓ}}}{{\text{r}}_{\text{d}}^{\text{3}}}$ for constant resolution and same carrier gas${\text{P}}_{\text{i2}} \text{=} \sqrt{{\text{r}}_{\text{p}} \text{(} {\text{P}}_{\text{i1}}^{\text{2}} \text{-} {\text{P}}_{\text{o}}^{\text{2}} \text{)+} {\text{P}}_{\text{o}}^{\text{2}}}$${\text{r}}_{\text{j}} \text{=} \frac{\text{(} {\overline{\text{P}}}_{\text{2}}^{\text{2}} \text{-1) (} {\overline{\text{P}}}_{\text{1}}^{\text{3}} \text{-1)}}{\text{(} {\overline{\text{P}}}_{\text{2}}^{\text{3}} \text{-1) (} {\overline{\text{P}}}_{\text{1}}^{\text{2}} \text{-1)}}$ where$\overline{\text{P}} \text{=} \frac{{\text{P}}_{\text{i}}}{{\text{P}}_{\text{o}}}$${\text{r}}_{\text{t}} \text{= ratio of holdup times =} \frac{{\text{r}}_{\text{ℓ}}}{{\text{r}}_{\text{j}} \text{r} {\text{}}_{{\text{u}}_{\text{o}}}} \text{=} \frac{{\text{r}}_{\text{d}} {\text{r}}_{\text{ℓ}}}{{\text{r}}_{\text{j}}} {\text{for r}}_{\text{β}} \text{= 1}$ The reciprocal of rₜ is the speed gain or loss factor obtained when translating from column 1 to column 2.
For the new column 2 oven program conditions:${\text{(Initial, intermediate, final hold times)}}_{\text{2}} \text{=} {\text{(initial, intermediate, final hold times)}}_{\text{1}} {\text{r}}_{\text{t}}$${\text{(oven ramp rates)}}_{\text{2}} {\text{= (oven ramp rates)}}_{\text{1}} {\text{/r}}_{\text{t}}$ rₜ may be viewed as the holdup time ratio or ratio of unretained peak times on the two columns. For example, if rₜ = 1/2, then an unretained peak exits column 2 in half the time for column 1. If all the other peaks in the chromatogram are to elute correspondingly in half the time, the oven program for column 2 has to be twice as fast as column 1. This can be accomplished by shortening holdup times by 1/2 and increasing rates by two times. In particular, the program on column 2 must execute in half the time of column 1. Therefore, each of the peaks on column 2 will elute with 1/2 the retention time of column 1. For the special case of constant resolution described in this Example, the peak widths on column 2 will also be 1/2 those on column 1.

If r_{d} ≠ r₁ ≠ r_{df} & r_{β} ≠ 1, ie. general case, then even though rₜ will correctly reflect the ratio of holdup times for the two columns, it will not provide the correct multiplier for oven program translation or for calculation of new retention times for retained peaks. The required expression is:${\text{r'}}_{\text{tr}} \text{=} \frac{{\text{r}}_{\text{t}}}{{\text{r}}_{\text{β}}} \text{=} \frac{{\text{t'}}_{\text{r2}}}{{\text{t}}_{\text{r1}}}$${\text{t'}}_{\text{r2}} \text{=} \frac{{\text{r}}_{\text{t}}}{{\text{r}}_{\text{β}}} {\text{t'}}_{\text{r1}}$ where
t'ᵣ₁ = corrected retention time of peak on column 1 = tᵣ₁ - tₘ₁
tₘ₁ = holdup time for column 1
Instead of multiplying oven program hold times and dividing ramp rates by r_{t'} this case requires correction for tₘ₁ before multiplication and division respectively by rₜ/r_{β}.

### Example 2: Column 2 Parameters = Column 1 Parameters

In this example, the user wishes to modify the analysis speed, perhaps on the same column, by increasing outlet linear velocity (uₒ) by three times. The changes in linear velocity will necessitate changes in oven program rates and holdup times. Since many analyses have more resolution than needed, the user can thus trade resolution for speed while preserving the elution temperature.

For purposes of this example, a single 200 µm column is employed. The outlet velocity uₒ is the "new" operating parameter which is "given" in this example and is increased from 50 to 150cm/sec. The invention then contemplates that the inlet pressures and oven programs are adjusted to match as set forth below:${\text{P}}_{\text{i2}} \text{=} \sqrt{{\text{r}}_{\text{p}} \text{(} {\text{P}}_{\text{i1}}^{\text{2}} \text{-} {\text{P}}_{\text{o}}^{\text{2}} \text{) +} {\text{P}}_{\text{o}}^{\text{2}}}$

The oven program correction factor is calculated as:${\text{r}}_{\text{t}} \text{=} \frac{\text{l}}{{\text{r}}_{\text{j}} \text{r} {\text{}}_{{\text{u}}_{\text{o}}}}$ and the speed gain is l/rₜ.

### Example 3: Sample Capacity:

Now that operational parameters for the column, inlet pressure and oven have been calculated, the sample capacity, or amount of sample required, must be determined. The sample capacity is directly proportional to the relative amounts of liquid phase in the two columns. The sample volume (rᵥ) ratio for the two columns is determined by:${\text{r}}_{\text{v}} {\text{= r}}_{\text{d}} \text{r} {\text{}}_{{\text{d}}_{\text{f}}} {\text{r}}_{\text{l}}$ or volume injected on column 2 is${\text{v}}_{\text{2}} {\text{= v}}_{\text{1}} {\text{r}}_{\text{d}} \text{r} {\text{}}_{{\text{d}}_{\text{f}}} {\text{r}}_{\text{l}}$ For example, if v₁ = 1µℓsplit 100:1
and${\text{r}}_{\text{d}} \text{= r} {\text{}}_{{\text{d}}_{\text{f}}} {\text{= r}}_{\text{1}} \text{= 1/2}$ then v₂ = v₁/8 =
1µℓ split 800:1
0.5µℓ split 400:1
0.1µℓ split 80:1 Which combination of sample size/split ratio can be used depends on the maximum flow available from the split vent and the fraction of the column capacity which remains.

Thus, an analyst can choose the appropriate size column, to determine an analysis time and sample size requirements which are optimum for a specific application. The system software can be used to automatically set or calculate setpoints for optimum Uₒᵤₜ or multiples thereof.

## Claims

1. A method for automatic configuration of the operating parameters of a gas chromatograph executing a new temperature program in response to the manual input of new column parameters such that the new chromatographic output has the same peak elution order as the chromatographic output of a known chromatographic method having known column parameters, known operating parameters, and the same liquid phase, comprising the steps of:
storing known column parameters and operating parameters of the known chromatographic method into the gas chromatograph, wherein two of said operating parameters are the column outlet linear velocity (Uₒᵤₜ) and the known temperature program;
inputting the new column parameters into the gas chromatograph;
calculating new operating parameters including a new temperature program, from said stored column and operating parameters and said inputted column parameters by calculating the new column outlet linear velocity and the new column average outlet linear velocity, and the ratio of the new column parameters to the known column parameters; and
automatically configuring the gas chromatograph with said calculated new operating parameters such that the elution temperature of each peak obtained with the new method can be the same as that obtained with the old method, thus ensuring that the peak elution order of said gas chromatograph with said new column parameters and operating parameters is the same as with said known column parameters and operating parameters.

2. The method for automatic configuration of the operating parameters of a gas chromatograph as in claim 1, wherein the phase ratio is held constant in the new method and the known method, such that the resolution of the old and new column can be the same.

## Patentansprüche

1. Ein Verfahren zur automatischen Konfiguration der Betriebsparameter eines Gaschromatographen, der ein neues Temperaturprogramm ausführt, ansprechend auf die manuelle Eingabe neuer Säulenparameter, derart, daß die neue chromatographische Ausgabe die gleiche Spitzeneluierungsreihenfolge wie die chromatographische Ausgabe eines bekannten chromatographischen Verfahrens mit bekannten Säulenparametern, bekannten Betriebsparametern und der gleichen flüssigen Phase aufweist, mit folgenden Schritten:
Speichern bekannter Säulenparameter und Betriebsparameter des bekannten chromatographischen Verfahrens in den Gaschromatographen, wobei zwei der Betriebsparameter die Säulenauslaß-Lineargeschwindigkeit (uₒᵤₜ) und das bekannte Temperaturprogramm sind;
Eingeben der neuen Säulenparameter in den Gaschromatographen;
Berechnen neuer Betriebsparameter, einschließlich eines neuen Temperaturprogramms, aus den gespeicherten Säulen- und Betriebsparametern und den eingegebenen Säulenparametern durch das Berechnen der neuen Säulenauslaß-Lineargeschwindigkeit und der neuen mittleren Säulenauslaß-Lineargeschwindigkeit sowie des Verhältnisses der neuen Säulenparameter zu den bekannten Säulenparametern; und
automatisches Konfigurieren des Gaschromatographen mit den berechneten neuen Betriebsparametern, derart, daß die Eluierungstemperatur jeder Spitze, die mit dem neuen Verfahren erhalten wird, die gleiche sein kann wie die, die mit dem alten Verfahren erhalten wird, wodurch sichergestellt wird, daß die Spitzeneluierungsreihenfolge des Gaschromatographen mit den neuen Säulenparametern und Betriebsparametern die gleiche ist wie mit den bekannten Säulenparametern und Betriebsparametern.

2. Das Verfahren zur automatischen Konfiguration der Betriebsparameter eines Gaschromatographen gemäß Anspruch 1, bei dem das Phasenverhältnis bei dem neuen Verfahren und dem bekannten Verfahren konstant gehalten wird, derart, daß die Auflösung der alten und der neuen Säule die gleiche sein kann.

## Revendications

1. Procédé pour la configuration automatique des paramètres de fonctionnement d'un chromatographe à gaz exécutant un nouveau programme de température en réponse à l'entrée manuelle de nouveaux paramètres de colonne de telle sorte que la nouvelle sortie chromatographique ait le même ordre d'élution de crête que la sortie chromatographique d'un procédé chromatographique connu ayant des paramètres de colonne connus, des paramètres de fonctionnement connus et la même phase liquide, comprenant les étapes consistant à :
stocker des paramètres de colonne connus et des paramètres de fonctionnement du procédé chromatographique connus dans le chromatographe à gaz, dans lequel deux desdits paramètres de fonctionnement sont la vitesse linéaire de sortie de colonne (Vₒᵤₜ) et le programme de température connu ;
appliquer en entrée les nouveaux paramètres de colonne dans le chromatographe à gaz ;
calculer les nouveaux paramètres de fonctionnement comportant un nouveau programme de température, d'après lesdits paramètres de colonne et de fonctionnement stockés et lesdits paramètres de colonne appliqués en entrée, en calculant la nouvelle vitesse linéaire de sortie de colonne et la nouvelle vitesse linéaire de sortie moyenne de colonne et le rapport des nouveaux paramètres de colonne aux paramètres de colonne connus ; et
configurer automatiquement le chromatographe à gaz avec lesdits nouveaux paramètres de fonctionnement calculés, de façon que la température d'élution de chaque crête obtenue avec le nouveau procédé puisse être la même que celle obtenue avec l'ancien procédé, assurant ainsi que l'ordre d'élution de crête dudit chromatographe à gaz avec lesdits nouveaux paramètres de colonne et paramètres de fonctionnement est le même qu'avec lesdits paramètres de colonne et de fonctionnement connus.

2. Procédé pour la configuration automatique des paramètres de fonctionnement d'un chromatographe à gaz selon la revendication 1, dans lequel le rapport de phase est maintenu constant dans le nouveau procédé et le procédé connu, de façon que la résolution de l'ancienne et la nouvelle colonne puisse être la même.
